# EUROPÄISCHE PATENTSCHRIFT

(11) **EP 2 052 797 B1**
(45) Veröffentlichungstag und Bekanntmachung des Hinweises auf die Patenterteilung: **05.05.2010**
(21) Anmeldenummer: 08017696.9
(22) Anmeldetag: 09.10.2008
(51) Int. Cl.: B21K 27/04

(54) **Vorrichtung zum schrittweisen Transport von Werkstücken durch den Arbeitsraum einer Umformmaschine**
Device for step-by-step transport of workpieces through the processing area of a forming machine
Dispositif de transport progressif de pièces usinées à travers l'espace de travail d'une machine de formage

(30) Priorität: 25.10.2007 DE 102007050982
(43) Veröffentlichungstag der Anmeldung: 29.04.2009
(73) Patentinhaber: SMS Meer GmbH, 41069 Mönchengladbach (DE)
(72) Erfinder: Graffy, Günter, Dipl.-Ing., 50389 Wesseling (DE)
(74) Vertreter: Grosse, Wolf-Dietrich Rüdiger

(56) Entgegenhaltungen:
- DE-A1- 3 706 160
- DE-A1- 10 305 888

## Beschreibung

Die Erfindung betrifft eine Vorrichtung zum schrittweisen Transport von Werkstücken durch den Arbeitsraum einer Umformmaschine gemäß dem Oberbegriff des Anspruchs 1 (siehe z.B. DE-A-3 706 160).

Bei der Fertigung von Werkstücken werden diese in mehreren Bearbeitungsabläufen, wie Umformen, Lochen oder Schneiden, auf Einzelpressen oder in Pressenstraßen hergestellt. Dabei kann aus wirtschaftlichen Gründen der Grad der Mechanisierung, d.h. die Verkettung der einzelnen Pressen untereinander, sehr unterschiedlich sein. Bei einer Transfer- oder Stufenpresse handelt es sich um eine Einzelpresse mit einer bestimmten Anzahl von hintereinander geschalteten Werkzeugstationen, d.h. verschiedene Arbeitsgänge sind in einer einzigen Presse zusammengefasst. Die Werkstücke werden in aufeinander folgenden Stufen bearbeitet, wobei während eines Pressenhubs in den einzelnen Stufen gleichzeitig unterschiedliche Arbeitsgänge stattfinden. Der Transport der Werkstücke von Stufe zu Stufe erfolgt über ein zweidimensionales oder dreidimensionales Greifersystem, welches in aller Regel mit dem Stößelantrieb mechanisch gekoppelt ist. Hierfür werden zwei parallel zueinander angeordnete Greiferschienen über die gesamte Länge der Stufenpresse beidseitig hindurchgeführt, um die Werkstücke innerhalb der Presse zu bewegen.

Der Werkstücktransport innerhalb der Umformmaschine bzw. Presse vollzieht sich beim klassischen Transfersystem über folgende Funktionen:
- Greifen der Werkstücke mittels einer Querbewegung der Greiferschiene;
- Heben des Werkstücks mittels einer Vertikalbewegung der Greiferschiene;
- Weitertransport des Werkstücks mittels einer Horizontalbewegung der Greiferschiene;
- Absenken der Werkstücke;
- Öffnen der Greifer;
- Rücklauf in Ausgangsstellung.

Generell muß die Greiferschiene nach Durchführung dieser dreidimensionalen Bewegung wieder in die Ausgangslage zurückgeführt werden. Zum Greifen der Werkstücke weisen die Hubbalken als Greiferschienen spezielle Werkstück-Greifersysteme auf.

Aus der EP 0 210 745 A2 ist der prinzipielle Aufbau des Bewegungsschemas für ein solches Dreiachssystem bekannt. Die beiden parallel durch die Presse verlaufenden Greiferschienen werden dreidimensional von einem Kurvengetriebe gesteuert. Dabei ist der Antrieb des Kurvengetriebes mit dem zentralen Pressenantrieb mechanisch gekoppelt. Dieses Kurvenscheiben aufweisende System ist relativ unflexibel. Eine schnelle Veränderung des Hubes einer Bewegung ist hierbei praktisch nicht realisierbar.

Durch die DE 33 29 900 C2 ist ein Transfersystem für eine Stufenpresse bekannt geworden, bei welchem der dreidimensionale Transport der Greiferschienen über jeweils eigene Antriebssysteme erfolgt. Dabei ist dem Vorrückmechanismus, dem Hubmechanismus sowie dem Spann- bzw. Schließmechanismus jeweils ein eigener elektrischer Antrieb zugeordnet, der über eine Getriebeanordnung den jeweiligen Bewegungsvorgang synchron für beide Greiferschienen durchführt. Eine mechanische Kopplung und damit eine gegenseitige Zwangssteuerung wie bei der zuvor genannten Druckschrift ist nicht vorgesehen.

Weiterhin ist aus der DE 38 42 182 C1 ein Greiferschienenantrieb für Stufenpressen bekannt, bei dem die Greiferschienen durch in Kugelgelenken gelagerte Schubstangen mit einem Schlitten verbunden sind. Bei der Schließ- und Öffnungs- bewegung und Heb- und Senkbewegung führen die Schubstangen eine Pendel- bewegung aus. Damit diese Pendelbewegung beim Verstellen der Greiferschienenweite symmetrisch bleibt, werden die Schlitten in einer Mitnehmertraverse um den gleichen Betrag durch Elektroantriebe verstellt. Solche Systeme, bei denen die Bewegungen mit Schubstangen und elektrischen Gewindespindeln bzw. Kurbelantrieben erzeugt werden, erlauben in der Regel nur kleine Bewegungshübe und sind nicht für hohe Leistungen ausgelegt.

Andere im Stand der Technik bekannte Systeme, welche die Bewegungen mit Schwingen und servohydraulischen Antrieben erzeugen, sind - besonders wenn alle Achsen einzeln fahrbar sein sollen - sehr teuer und haben einen schlechten Wirkungsgrad. Außerdem stellen brennbare Hydraulikmedien ein erhöhtes Risiko einer Brandgefahr an einer Umformmaschine dar.

Des weiteren sind Antriebseinrichtungen für einen mehrachsigen Transport von Werkstücken bekannt, die in allen Bewegungsachsen Linearführungen aufweisen. Hierbei werden zur Abdichtung der Führungen komplizierte und schwere Dichtungssysteme benötigt, da ansonsten die Führungen einem hohen Verschleiß unterliegen und dementsprechend häufig ersetzt werden müssen. Auch sind die zu bewegenden Totmassen hier verhältnismäßig groß, da die Antriebe für nachfolgende Bewegungsachsen linear mit verschoben werden müssen.

Der Erfindung liegt die Aufgabe zugrunde, eine gattungsgemäße Vorrichtung zu schaffen, bei welcher Einzelantriebe für die verschiedenen Bewegungsabläufe eingesetzt werden können, wobei zum einen die Fahrgeschwindigkeiten hoch und damit die Transferzeiten der Werkstücke kurz sind und zum andern das gesamte System schwingungsunempfindlich und steif ist, um einen sicheren Werkstücktransport zu gewährleisten.

Diese Aufgabe wird erfindungsgemäß dadurch gelöst, dass das Schwingengehäuse mit einem ersten Innenzahnrasegment, oder Auβenzahnradsegment, zur Horizontalbewegung des Hubbalkens in Transportrichtung und die Schwinge mit einem zweiten Innenzahnradsegment, oder Auβenzahradsegment zur Bewegung des Hubbalkens quer zur Transportrichtung im pendelnden Eingriff ist. Durch die erfindungsgemäße Antriebseinrichtung wird ein Doppelpendelantrieb mit voneinander abweichenden Bewegungsabläufen für den horizontalen Transport und die Querbewegung zum Greifen bzw. Ablegen der Werkstücke innerhalb der Umformmaschine erreicht. Dadurch, dass die Greiferschienen bzw. Hubbalken an ihren jeweiligen beiden Enden gelenkig mit einem Doppelpendelantrieb ausgebildet sind, können einerseits die Transport- und Querbewegungen in ihren Bewegungsabläufen weitestgehend unabhängig gestaltet werden und andererseits kann eine unmittelbare Beeinflussung der Bewegungsabläufe zueinander erfolgen, d.h. zur Taktzeitverkürzung respektive zur Minimierung der Transferzeiten sind auch Bewegungsüberschneidungen realisierbar.

Eine bevorzugte Ausgestaltung der Erfindung sieht vor, dass das Hubsystem in einem geschlossenen Hubsystemgehäuse untergebracht einen Hubschlitten mit Linearführungen, eine als Zahnstange ausgebildete Verlängerung der Linearführung sowie ein Ritzel eines einschließlich Getriebe an das Gehäuse angeflanschten ersten Servomotors und eine an den Hubschlitten angreifende Kolbenstange eines Zylinders aufweist.

Die vertikale Hubbewegung des mit den Greiferschienen ausgebildeten Hubbalkens wird über die Servomotor/Getriebeeinheit und das mit der Zahnstange kämmende Ritzel linear erzeugt. Die Hubmassen werden von dem Zylinder, welcher vorzugsweise als Pneumatikzylinder mit Speichervolumen ausgebildet ist, angehoben und kompensiert.

Die gesamte Bewegungsmechanik des Hubsystems befindet sich innerhalb des geschlossenen Gehäuses, so daß sich Verschmutzungen und Beschädigungen der Bauteile vermeiden lassen.

Die Kombination aus jeweils separaten und unabhängig voneinander regel- und programmierbaren Antrieben für die Horizontalbewegung in Pressendurchlaufrichtung, für die Bewegung quer zur Pressendurchlaufrichtung und die vertikale Hubbewegung ermöglicht eine gezielte Reduzierung der Verfahrwege und somit eine Erhöhung der Fahrgeschwindigkeiten, wodurch eine Verringerung der Taktzeiten erreicht wird. Die geringere Nebenzeit führt zu einer gewünschten Erhöhung der Hubzahl und damit auch der Teilefertigung.

Erfindungsgemäß ist weiterhin vorgesehen, dass die Achse des drehbaren Schwingengehäuses aus einer länglichen Öffnung des Hubsystemgehäuses herausragt und die Öffnung durch eine am Hubschlitten angeordnete Platte abgedichtet ist. Die Abdichtungsplatte wird somit bei jeder Hubbewegung des Hubsystems mitgeführt, wodurch gewährleistet ist, dass bei jeder Hubstellung das Gehäuseinnere wirksam gegen den Eintritt von Schmutz und beispielsweise aggressiven Gesenksprühmitteln abgedichtet ist. An Führungen der Platte vorgesehene Labyrinthe verbessern die Abdichtung zusätzlich.

In vorteilhafter Weiterbildung der Erfindung erfolgt der Antrieb des Schwingengehäuses mittels eines zweiten Servomotors, wobei die Antriebsleistung über ein mit dem ersten Zahnradsegment kämmendes Ritzel übertragen wird. Die Kombination aus dem im Sinne eines Stellantriebes Positionen beibehaltenden Servomotor und dem Zahnradsegment ermöglicht eine schnelle sowie positionsgenaue Pendelbewegung des Schwingengehäuses und die Horizontalbewegung des Hubbalkens in Pressendurchlaufrichtung (Achse Transport).

Die vorstehend genannten Vorteile treffen gleichermaßen auch auf den Antrieb der Schwinge zu, die ebenfalls von einem dritten Servomotor angetrieben ist, der die Antriebsleistung über ein mit dem zweiten Zahnradsegment kämmendes Ritzel überträgt. Die Schwinge vollzieht dabei eine Pendelbewegung um die zweite, gegenüber der Pendelachse des Schwingengehäuses um 90° gedrehten Achse, wodurch die Bewegung quer zur Pressendurchlaufrichtung erzeugt wird (Achse Öffnen/Schließen).

Alle Servomotorantriebe, einschließlich für die vertikale Hubbewegung, sind mit selbstschließenden Federkraftbremsen ausgerüstet, um eine selbständige Bewegung des Schwingengehäuses, der Schwinge und der Hubeinrichtung bei stromlosen Antrieben zu verhindern. Die schwerkraftbelastete Vertikalachse (Hubachse) wird bei stromlosen Antrieben zusätzlich durch eine Federkraft-Senkbremse gesichert.

Die Antriebssysteme Servomotor/Zahnradsegment ermöglichen trotz kompakter Bauweise große Bewegungshübe der einzelnen Bewegungsachsen (Heben/Senken, Transport und Öffnen/Schließen) der Greiferschienen bzw. der Hubbalken.

Eine hohe Dynamik ist auch durch den stationären Anbau der kompakten Antriebssysteme gewährleistet, wodurch die zu bewegenden Massen gering gehalten werden. Dies ermöglicht den Einsatz von Motoren mit geringerer Antriebsleistung.

Eine weitere Ausgestaltung der Erfindung sieht vor, dass die Hubbalken bzw. Greiferschienen einerseits über ein Schwenklager mit dem freien Ende der Schwinge verbunden und andererseits mittels einer Parallelogrammführung mit Schwenklagern am Schwingengehäuse und an den Greiferschienen befestigt sind. Durch die Parallelogrammführung wird ein Drehen der Greiferschienen um ihre Längsachse verhindert.

Des weiteren liegt es im Ausgestaltungsrahmen der Erfindung, dass bei einem von zwei Antriebseinheiten angetriebenen Hubbalken die eine der beiden Antriebseinheiten ohne Horizontalbewegungsmittel ausgebildet sein kann. Die zweite Antriebseinheit hat dann dort nur eine Schleppachse.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Fig. 1: ein aus zwei parallelen, als Greiferschienen ausgebildeten Hubbalken bestehendes Transfersystem zum mehrachsigen Transport von Werkstücken innerhalb eines Arbeitsraumes einer Umformmaschine (Presse), wobei an beiden Enden der Hubbalken Antriebseinrichtungen vorgesehen sind, in der Draufsicht als Querschnitt des Pressenrahmens oberhalb des Arbeitsraums dargestellt;
- Fig. 2: den Gegenstand der Fig. 1 in einer Seitenansicht dargestellt; und
- Fig. 3: als Einzelheit einer Antriebseinrichtung ein an einem Hubsystem angeordnetes Schwingengehäuse mit Schwinge zum mehrachsigen Transfer eines Hubbalkens, in einer teilgeschnittenen Seitenansicht dargestellt.

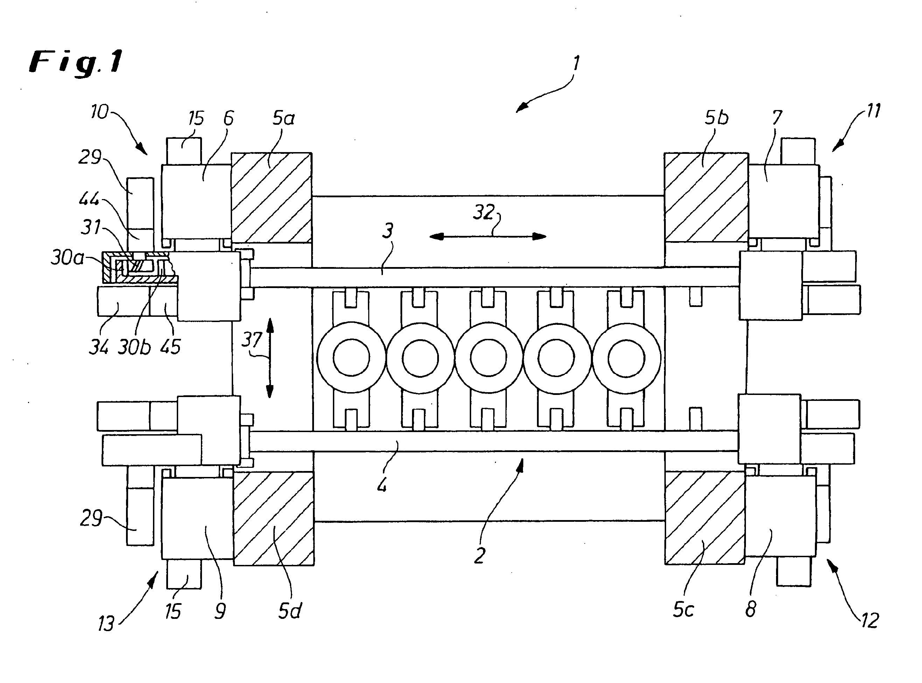

In der Fig. 1 ist eine Umformmaschine 1 dargestellt, in der Werkstücke in mehreren Arbeitsgängen umgeformt werden. Der Transport der Werkstücke zum Durchlauf in der Umformmaschine 1 zu den einzelnen Umformstufen (z.B. Umformen, Lochen, Schneiden) erfolgt mittels Hubbalken 2, die hier als durch die Gesamtlänge der Stufenpresse 1 hindurchführende Greiferschienen 3, 4 ausgebildet sind.

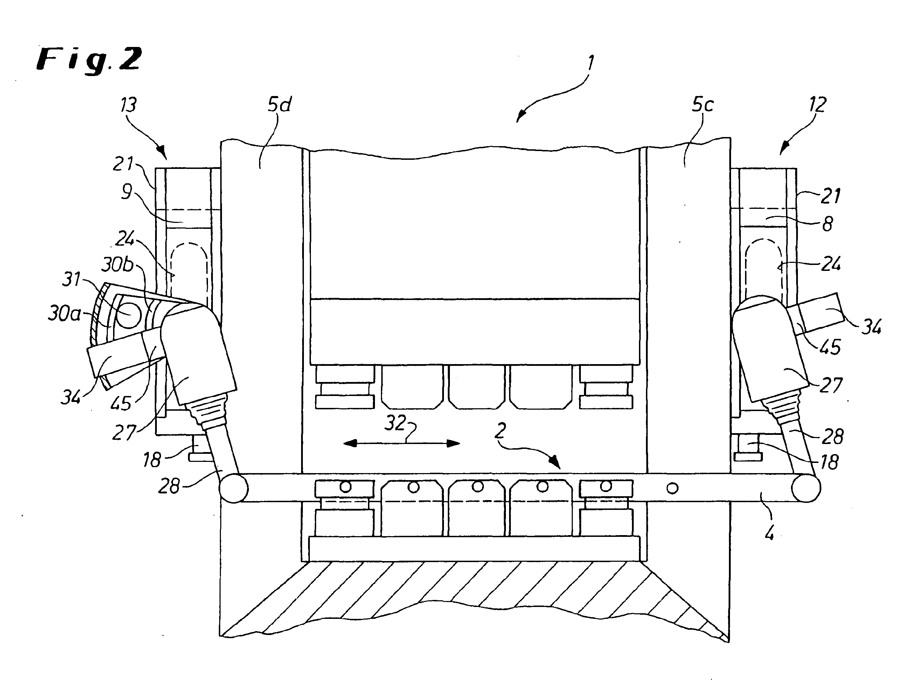

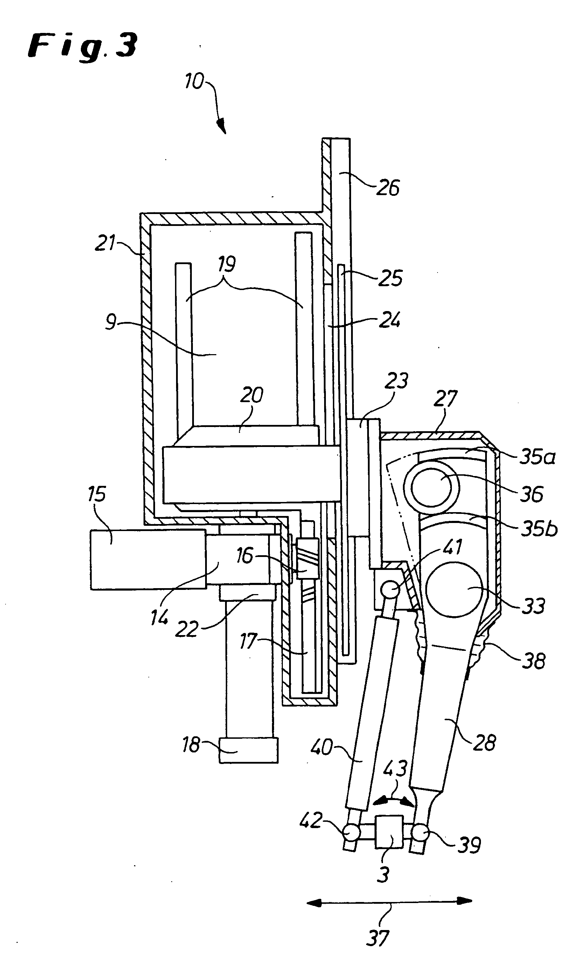

Zur Durchführung einer Hubbewegung des Hubbalkens 2 ist an den vier Rahmensäulen 5a bis 5d des Maschinenrahmens jeweils eine mit den Enden der Greiferschienen 3, 4 verbundene Antriebseinheit 6 bis 9 angeordnet, denen jeweils ein integriertes Hubsystem 10 bis 13 zugeordnet ist (vgl. hierzu Fig. 2 und 3).

Die Antriebseinheiten 6 bis 9 umfassen jeweils einen mit einem Getriebe 14 versehenen Servomotor 15, wobei ein Ritzel 16 des Getriebes 14 mit einer Zahnstange 17 des Hubsystems 10 bis 13 kämmt. Hierdurch wird eine vertikale Hubbewegung - im Zusammenhang mit einem Drei-Achs-Transfer bezeichnet man diese Hubbewegung auch als Bewegung der vertikalen Achse (Heben/Senken) - der Greiferschienen 3, 4 erzeugt. Die dabei zu bewegenden Hubmassen werden durch einen mit einem Speichervolumen ausgebildeten Pneumatikzylinder 18 angehoben und kompensiert. Dieser greift mit seiner Kolbenstange an einen sich in Linearführungen 19 bewegenden Hubschlitten 20 des Hubsystems 10 bis 13 an. Sowohl die Kolbenstange des Pneumatikzylinders 18 als auch der Hubschlitten 20 mit den Linearführungen 19 sowie die Zahnstange 17 und das Ritzel 16 befinden sich in einem geschlossenen Gehäuse 21.

Um ein Absinken der schwerkraftbelasteten Hubbalken 2 bzw. Greiferschienen 3, 4 bei nicht angesteuertem Servomotor 15 zu verhindern, sind die Pneumatikzylinder 18 mit einer Federkraft-Senkbremse 22 ausgestattet.

Die Hubschlitten 20 besitzen eine Achse 23, die durch eine längliche Öffnung 24 seitlich aus dem Gehäuse 21 hervorragt. Die Abdichtung der länglichen Öffnung 24 erfolgt durch eine Platte 25, welche am Hubschlitten 20 befestigt ist und in am Gehäuse 21 ausgebildeten Führungen 26 bei einer Hubbewegung mit auf und ab gleitet. Hier nicht dargestellte Labyrinthe an den Führungen 26 verbessern die Abdichtung zusätzlich.

Auf den Achsen 23 ist jeweils ein Schwingengehäuse 27, welches über eine im Inneren angeordnete Schwinge 28 pendelnd mit den Greiferschienen 3, 4 in Eingriff steht, schwenkbeweglich gelagert. Das Schwingengehäuse 27 wird mittels eines ein Getriebe 44 aufweisenden Servomotors 29 angetrieben, wobei die Antriebsleistung über ein mit einem Innenzahnradsegment 30a oder Außenzahnradsegment 30b kämmendes Ritzel 31 übertragen und das Schwingengehäuse 27 somit in eine pendelnde Bewegung versetzt wird. Die Pendelbewegung erzeugt dabei eine Horizontalbewegung 32 der Hubbalken 2 in Pressendurchlaufrichtung, die im Zusammenhang mit dem eingangs genannten Drei-Achs-Transfer als Transportachse bezeichnet wird.

Die Schwinge 28 ist innerhalb des Schwingengehäuses 27 schwenkbeweglich auf einer Achse 33 gelagert, die um 90° gedreht zur Achse 23 des Schwingengehäuses 27 angeordnet ist. Die Schwinge 28 wird ebenfalls mittels eines mit einem Getriebe 45 versehenen Servomotors 34 angetrieben, wobei auch hier die Antriebsleistung über ein mit einem Innenzahnradsegment 35a oder Außenzahnradsegment 35b kämmendes Ritzel 36 übertragen und die Schwinge 28 somit in eine zweite pendelnde Bewegung versetzt wird. Die Pendelbewegung erzeugt dabei eine Bewegung der Hubbalken 2 quer zur Pressendurchlaufrichtung 37, die im Zusammenhang mit dem Drei-Achs-Transfer als Achse zum Öffnen/Schließen bezeichnet wird. Eine flexible Balgabdeckung 38 oder eine sich mitbewegende Metallabdeckung dichtet die Schwinge 28 am Schwingengehäuse 27 ab (vgl. hierzu Fig. 1).

Die Hubbalken 2 bzw. Greiferschienen 3, 4 sind über Schwenklager 39 mit den freien Enden der Schwinge 28 verbunden. Eine Parallelogrammführung (Lenker) 40, welche über Schwenklager 41 am Schwingengehäuse 27 und über Schwenklager 42 an der Greiferschiene 3 gelagert ist, verhindert eine Drehbewegung bzw. ein Verkanten der Greiferschiene 3 um ihre Längsachse 43.

### Bezugszeichenliste

- 1: Umformmaschine
- 2: Hubbalken
- 3: Greiferschiene
- 4: Greiferschiene
- 5a bis 5d: Rahmensäulen
- 6 bis 9: Antriebseinheit
- 10 bis 13: Hubsystem
- 14: Getriebe
- 15: Servomotor
- 16: Ritzel
- 17: Zahnstange
- 18: Pneumatikzylinder
- 19: Linearführung
- 20: Hubschlitten
- 21: Gehäuse
- 22: Federkraft-Senkbremse
- 23: Achse
- 24: Öffnung
- 25: Platte
- 26: Führung
- 27: Schwingengehäuse
- 28: Schwinge
- 29: Servomotor
- 30a: Innenzahnsegment
- 30b: Außenzahnradsegment
- 31: Ritzel
- 32: Horizontalbewegung
- 33: Achse
- 34: Servomotor
- 35a: Innenzahnradsegment
- 35b: Außenzahnradsegment
- 36: Ritzel
- 37: Pressendurchlaufrichtung
- 38: Balgabdeckung
- 39: Schwenklager
- 40: Parallelogrammführung (Lenker)
- 41: Schwenklager
- 42: Schwenklager
- 43: Längsachse
- 44: Getriebe
- 45: Getriebe

## Patentansprüche

1. Vorrichtung zum schrittweisen Transport von Werkstücken durch den Arbeitsraum einer Umformmaschine (1), insbesondere eine Schmiedepresse, umfassend mindestens einen Hubbalken (2; 3, 4), optional ausgebildet mit Greifmitteln als Greiferschiene, der an seinen beiden Enden mit Antriebseinheiten (6 bis 9) verbunden ist, die den Hubbalken (2) oder die Greiferschiene (3, 4) im Pressenraum horizontal, vertikal und quer zur Transportrichtung bewegen,
wobei die Antriebseinheiten (6 bis 9) eines Hubsystems (10 bis 13) mit einem auf einer Achse (23) drehbaren Schwingengehäuse (27) und einer in dem Schwingengehäuse (27) um 90° gedreht zu der Achse (23) gelagerten, an den Hubbalken (2; 3,4) angelenkten Schwinge (28) ausgebildet sind, wobei das Schwingengehäuse (27) und die Schwinge (28) pendelnd angetrieben sind, **dadurch gekennzeichnet, dass** das Schwingengehäuse (27) mit einem ersten Innenzahnradsegment (30a) oder Außenzahnradsegment (30b) zur Horizontalbewegung des Hubbalkens (2; 3, 4) in Transportrichtung (32) und die Schwinge (28) mit einem zweiten Innenzahnradsegment (35a) oder Außenzahnradsegment (35b) zur Bewegung des Hubbalkens (2; 3, 4) quer zur Transportrichtung (32) im pendelnden Eingriff ist.

2. Vorrichtung nach Anspruch 1,
**dadurch gekennzeichnet,**
**dass** das Hubsystem (10 bis 13) in einem geschlossenen Hubsystemgehäuse (21) untergebracht einen Hubschlitten (20) mit Linearführung (19), eine als Zahnstange (17) ausgebildete Verlängerung der Linearführung (19) sowie ein Ritzel (16) eines einschließlich Getriebe (14) an das Gehäuse (21) angeflanschten ersten Servomotors (15) und eine an den Hubschlitten (20) angreifende Kolbenstange eines Zylinders (18) aufweist.

3. Vorrichtung nach Anspruch 2,
**dadurch gekennzeichnet,**
**dass** der Zylinder ein Pneumatikzylinder (18) mit Speichervolumen ist.

4. Vorrichtung nach einem der Ansprüche 2 bis 3,
**dadurch gekennzeichnet,**
**dass** die Achse (23) des drehbaren Schwingengehäuses (27) aus einer länglichen Öffnung (24) des Hubsystemgehäuses (21) herausragt und die längliche Öffnung (24) durch eine am Hubschlitten (20) befestigte Platte (25) abgedichtet ist.

5. Vorrichtung nach einem der Ansprüche 1 bis 4,
**dadurch gekennzeichnet,**
**dass** das Schwingengehäuse (27) mittels eines zweiten Servomotors (29) angetrieben ist.

6. Vorrichtung nach Anspruch 5,
**dadurch gekennzeichnet,**
**dass** der zweite Servomotor (29) die Antriebsleistung über ein mit dem ersten Innenzahnradsegment (30a) oder Außenzahnradsegment (30b)kämmendes Ritzel (31) überträgt.

7. Vorrichtung nach einem der Ansprüche 1 bis 6,
**dadurch gekennzeichnet,**
**dass** die Schwinge (28) mittels eines dritten Servomotors (34) angetrieben ist.

8. Vorrichtung nach Anspruch 7,
**dadurch gekennzeichnet,**
**dass** der dritte Servomotor (34) die Antriebsleistung über ein mit dem zweiten Innenzahnradsegment (35a) oder Außenzahnradsegment (35b) kämmendes Ritzel (36) überträgt.

9. Vorrichtung nach einem der Ansprüche 1 bis 8,
**dadurch gekennzeichnet,**
**dass** die Hubbalken (2; 3, 4) einerseits über ein Schwenklager (39) mit dem freien Ende der Schwinge (28) verbunden und andererseits mittels Parallelogrammlenker (40) mit Schwenklagern (41, 42) am Schwingengehäuse (27) und an den Hubbalken (2; 3, 4) befestigt sind.

10. Vorrichtung nach einem der Ansprüche 1 bis 9,
**dadurch gekennzeichnet,**
**dass** die Servoantriebe (15, 29, 34) mit selbstschließenden Federkraftbremsen ausgebildet sind.

11. Vorrichtung nach einem der Ansprüche 2 bis 4,
**dadurch gekennzeichnet,**
**dass** das Hubsystem (10 bis 13) in der Vertikalachse des Hubschlittens (20) durch eine Federkraftsenkbremse (22) des Zylinders (18) gesichert ist.

## Claims

1. A device for incrementally transporting workpieces through the working area of a metal forming machine (1), particularly a forging press, comprising at least one walking beam (2; 3, 4) that is optionally realized in the form of a gripper rail with gripping means and connected on its two ends to drive units (6 to 9) that move the walking beam (2) or the gripper rail (3, 4) horizontally, vertically and transversely to the transport direction in the press area, wherein the drive units (6 to 9) of a lifting system (10 to 13) are realized with a rocker housing (27) that is rotatable on an axle (23) and a rocker (28) that is supported in the rocker housing (27) such that it is turned relative to the axle (23) by 90° and coupled to the walking beam (2; 3, 4), and wherein the rocker housing (27) and the rocker (28) are driven in pendulum fashion,
**characterized in**
**that** the rocker housing (27) is engaged in pendulum fashion with a first internal gear wheel segment (30a) or external gear wheel segment (30b) for the horizontal movement of the walking beam (2; 3, 4) in the transport direction (32) and the rocker (28) is engaged in pendulum fashion with a second internal gear wheel segment (35a) or external gear wheel segment (35b) for the movement of the walking beam (2; 3, 4) transverse to the transport direction (32).

2. The device according to Claim 1,
**characterized in**
**that** the lifting system (10 to 13) is accommodated in a closed lifting system housing (21) and features a lifting carriage (20) with linear guide (19), an extension of the linear guide (19) that is realized in the form of a rack (17), as well as a pinion gear (16) of a first servomotor (15) that is flanged to the housing (21) together with its transmission (14) and a piston rod of a cylinder (18) that engages on the lifting carriage (20).

3. The device according to Claim 2,
**characterized in**
**that** the cylinder is a pneumatic cylinder (18) with storage volume.

4. The device according to one of Claims 2 to 3,
**characterized in**
**that** the axle (23) of the rotatable rocker housing (27) protrudes from an oblong opening (24) of the lifting system housing (21) and the oblong opening (24) is sealed by a plate (25) fastened on the lifting carriage (20).

5. The device according to one of Claims 1 to 4,
**characterized in**
**that** the rocker housing (27) is driven by means of a second servomotor (29).

6. The device according to Claim 5,
**characterized in**
**that** the second servomotor (29) transmits the driving power by means of a pinion gear (31) that meshes with the first internal gear wheel segment (30a) or external gear wheel segment (30b).

7. The device according to one of Claims 1 to 6,
**characterized in**
**that** the rocker (28) is driven by means of a third servomotor (34).

8. The device according to Claim 7,
**characterized in**
**that** the third servomotor (34) transmits the driving power by means of a pinion gear (36) that meshes with the second internal gear wheel segment (35a) or external gear wheel segment (35b).

9. The device according to one of Claims 1 to 8,
**characterized in**
**that** the walking beams (2; 3, 4) are connected to the free end of the rocker (28) by means of a pivot bearing (39) on one side and fastened to the rocker housing (27) and to the walking beams (2; 3, 4) by means of parallelogram links (40) with pivot bearings (41, 42) on the other side.

10. The device according to one of Claims 1 to 9,
**characterized in**
**that** the servodrives (15, 29, 34) are realized with automatically closing spring-applied brakes.

11. The device according to one of Claims 2 to 4,
**characterized in**
**that** the lifting system (10 to 13) is secured in the vertical axis of the lifting carriage (20) by means of a spring-applied lowering brake (22) of the cylinder (18).

## Revendications

1. Dispositif de transport progressif de pièces à usiner à travers l'espace de travail d'une machine de formage (1), notamment d'une presse à forger, comprenant au moins un longeron mobile (2 ; 3, 4), conçu en option avec des moyens de préhension sous forme de rail preneur, qui sur ses deux extrémités est relié à des unités d'entraînement (6 à 9) qui déplacent le longeron mobile (2) ou le rail preneur (3, 4) à l'horizontale, à la verticale et à la transversale de la direction de transport dans l'espace de la presse, les unités d'entraînement (6 à 9) d'un système de levage (10 à 13) étant conçues avec un carter oscillant (27) rotatif autour d'un axe (23) et une bielle oscillante (28) logée dans le carter oscillant (27) en étant tournée à 90° par rapport à l'axe (23), articulée sur les longerons mobiles (2 ; 3, 4), le carter oscillant (27) et la bielle oscillante (28) étant entraînés de façon pendulaire,
**caractérisé en ce que**
le carter oscillant (27) est en engagement pendulaire avec un premier segment de roue dentée intérieure (30a) ou segment de roue dentée extérieure (30b), pour le déplacement horizontal du longeron mobile (2 ; 3, 4) dans la direction de transport (32) et la bielle oscillante (28) est en engagement pendulaire avec un deuxième segment de roue dentée intérieure (35a) ou segment de roue dentée extérieure (35b), pour le déplacement du longeron mobile (2 ; 3, 4) à la transversale de la direction de transport (32).

2. Dispositif selon la revendication 1,
**caractérisé en ce que**
le système de levage (10 à 13) comporte, logés dans un carter fermé pour système de levage (21) un chariot de levage (20) à guidage linéaire (19), un prolongement du guidage linéaire (19) conçu sous la forme d'une crémaillère (17), ainsi qu'un pignon (16) d'un servomoteur (15) bridé, en commun avec la transmission (14) sur le carter (21) et une tige de piston d'un vérin (18) s'engageant sur le chariot de levage (20).

3. Dispositif selon la revendication 2,
**caractérisé en ce que**
le vérin est un vérin pneumatique (18) avec volume d'accumulation.

4. Dispositif selon l'une quelconque des revendications 2 ou 3,
**caractérisé en ce que**
l'axe (23) du carter oscillant rotatif (27) saillit hors d'une ouverture oblongue (24) du carter de système de levage (21) et **en ce que** l'ouverture oblongue (24) est rendue étanche par une plaque (25) fixée sur le chariot de levage (20).

5. Dispositif selon l'une quelconque des revendications 1 à 4,
**caractérisé en ce que**
le carter oscillant (27) est entraîné au moyen d'un deuxième servomoteur (29).

6. Dispositif selon la revendication 5,
**caractérisé en ce que**
le deuxième servomoteur (29) transmet la puissance d'entraînement par l'intermédiaire d'un pignon (31) qui s'engrène dans le premier segment de roue dentée intérieure (30a) ou segment de roue dentée extérieure (30b).

7. Dispositif selon l'une quelconque des revendications 1 à 6,
**caractérisé en ce que**
la bielle oscillante (28) est entraînée au moyen d'un troisième servomoteur (34).

8. Dispositif selon la revendication 7,
**caractérisé en ce que**
le troisième servomoteur (34) transmet la puissance d'entraînement par l'intermédiaire d'un pignon (36) qui s'engrène dans le deuxième segment de roue dentée intérieure (35a) ou segment de roue dentée extérieure (35b).

9. Dispositif selon l'une quelconque des revendications 1 à 8,
**caractérisé en ce que**
les longerons mobiles (2 ; 3, 4) sont reliés d'une part par l'intermédiaire d'un palier de pivotement (39) avec l'extrémité libre de la bielle oscillante (28) et sont fixés d'autre part au moyen d'un bras articulé de parallélogramme (40) avec des paliers de pivotement (41, 42) sur le carter oscillant (27) et sur les longerons mobiles (2 ; 3, 4).

10. Dispositif selon l'une quelconque des revendications 1 à 9,
**caractérisé en ce que**
les servocommandes (15, 29, 34) sont conçues avec des freins à ressort à fermeture automatique.

11. Dispositif selon l'une quelconque des revendications 2 à 4,
**caractérisé en ce que**
le système de levage (10 à 13) est bloqué dans l'axe vertical du chariot de levage (20) par un frein de descente à ressort (22) du vérin (18).
